# EUROPEAN PATENT SPECIFICATION

(11) **EP 0 481 959 B1**
(45) Date of publication and mention of the grant of the patent: **02.02.1994**
(21) Application number: 92100196.2
(22) Date of filing: 04.11.1988
(51) Int. Cl.: B60R 22/20

(54) **Adjustable shoulder belt anchor mechanism**
In Schulterhöhe einstellbarer Gurt-Verankerungsmechanismus
Mécanisme de renvoi de sangle latéral réglable

(30) Priority: 06.11.1987 JP 169698/87 U; 09.03.1988 JP 30404/88 U
(43) Date of publication of application: 22.04.1992
(62) Divisional of application: 88118404.8
(73) Proprietor: Nippon Seiko Kabushiki Kaisha, Tokyo (JP)
(72) Inventor: Tokugawa, Osamu, Fujisawa-shi, Kanagawa-ken (JP)
(74) Representative: Füchsle, Klaus, Dipl.-Ing.

(56) References cited:
- DE-A- 3 308 817
- DE-U- 8 709 069
- GB-A- 2 176 091
- US-A- 4 621 836

## Description

The invention relates to an adjustable shoulder belt anchor mechanism according to the preamble part of claim 1.

Such a shoulder belt anchor mechanism is known from DE-U-8 709 069. With the shoulder belt anchor mechanisms of this citation one of the bolts has been replaced with a hook section which engages a hole of the vehicle chassis. This arrangement significally reduces the cost for parts since a bolt may be eliminated and it reduces the cost for assembly since only one bolt needs to be fastened. However, the generic shoulder belt anchor mechanism fails to solve the problem of vibration or noise. If No gap ever appeared between the hook section and the edge of the hole of the vehicle chassis, then no vibration noise would be generated. However, producing parts with tolerances that accurate would cost even more than would be saved by eliminating the bolt.

It is therefore an object underlying the present invention to provide an adjustable shoulder belt anchor mechanism according to the preamble part of claim 1 which is able to reduce the manufacturing costs by loosening the tolerances necessary for vibration-free connection between the hook and the engaging hole.

The solution of this object is achieved by the features of claim 1, which are effective to absorb the looseness in X-Y-directions caused by tolerances in production.

The dependent claims contain advantageous embodiments of the present invention.

These and other objects, features and advantages of the present invention will become more apparent from the following description of the preferred embodiments taken in conjunction with the accompanying drawings, in which
- Fig. 1: is a front elevational view of a first embodiment of the present invention;
- Fig. 2: is a cross-sectional view of the first embodiment of the present invention;
- Fig. 3a: is a front elevational view of the male engaging section of the first embodiment of the present invention;
- Fig. 3b: is a cross-sectional view of the male engaging portion of the first embodiment;
- Fig. 4a: is a front elevational view of the male engaging section of a second embodiment of the present invention;
- Fig. 4b: is a cross-sectional view of the male engaging portion of the second embodiment of the present invention;
- Fig. 5a: is a front elevational view of the front engaging section of a third embodiment of the present invention;
- Fig. 5b: is a cross-sectional view of the male engaging section of the third embodiment of the present invention.

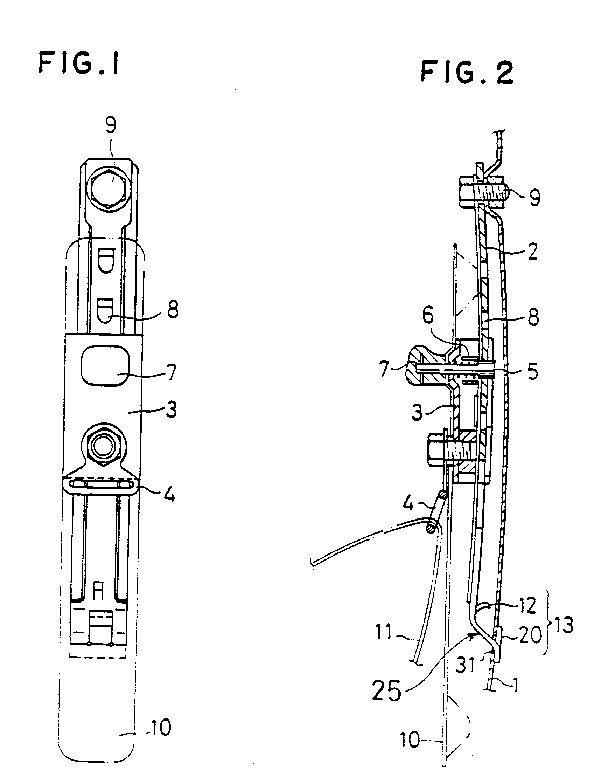

Figs. 1 and 2 depict an adjustable shoulder belt anchor mechanism of the present invention which is mounted onto a vehicle chassis 1 and comprised of an adjustment base or guiding member 2, an adjustable anchor or runner 3, a slip joint 4, a movable lock pin 5, a spring 6 and a knob 7. The adjustment base 2 is formed with a plurality of engaging sections or openings 8.

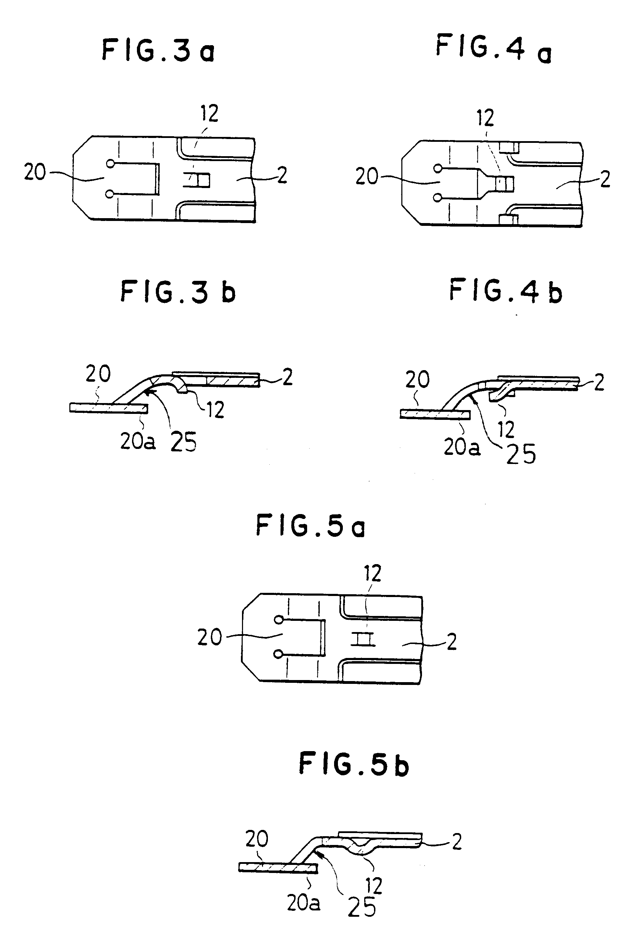

Provided on one end of the adjustment base or the guiding member 2 is a male engaging section 13 which comprises a hook section 20 and a projection 12 provided close to the hook section 20. As illustrated in Figs. 3a and 3b, the hook section 20 is made in such a manner that a cutout is formed at the end of the adjustment base 2 to form a tongue section 20a which is turned up to form a tapered section 25, and the tongue section 20a is shaped parallel to the center section of the adjustment base 2. The projection 12 is formed by cutting out the center section of the adjustment base 2 and the edge portion thereof, such that the projection 12 is projected in substantially the same direction as the tongue section 20a.

The hook section 20 of the main engaging section 13 is inserted into an engaging hole 31 in the chassis 1, so that it contacts the back surface of the chassis 1 at the tongue section 20a and the projection 12 contacts the front or room side of the chassis 1. The chassis 1 specifically the edge of the engaging hole 31 is thus flexibly interposed between the hook section 20 and the projection 12. Even if the male engaging section 13 shifts downward resulting in that a clearance is formed between this male engaging section 13 and the chassis 1, since the chassis 1 is interposed between the tongue section 20a and the projection 12, the adjustment base 2 cannot slip in the direction of the thickness of the chassis 1. Accordingly, the male engaging section 13 cannot separate from the chassis 1 whereby the creation of interference noise can be prevented.

Figs. 4a and 4b show details of the male engaging section of the second embodiment of the present invention. The center section of the adjustment base 2 and the hook section 20 are formed with a cutout to form a projection 12 and a tongue section 20a, respectively, and the cutouts are connected with each other to form a single opening. Therefore, the projection 12 is projected from the center section of the adjustment base 2 toward the hook section 20 comprising the tapered section 25 raised from the tongue section 20a.

Figs. 5a and 5b show details of the male engaging section of a third embodiment of the present invention. The projection 12 is formed by providing a pair of parallel cuts with a section between the cuts remained at both ends in connection with the adjustment base 2, and the portion between the cuts is bent to form a projection 12 like a wrinkle.

In the second and third embodiments of the present invention, the chassis 1, specifically the edge of the engaging hole 31 is interposed between the hook section 20 and the projection 12 as in the same manner as in the first embodiment.

In the first to third embodiments of the present invention, the case is shown whether the hook section 20 is provided on the bottom side of the adjustment base or guiding member 2. However, it is also possible to provide the hook section 20 on the top side to the adjustment base 2.

As outlined above, by means of the present invention, it is possible without using a coupling means such as a screw and the like, to secure one end of the adjustment base or guiding member by simply inserting the hook section of the adjustment base into the engaging hole of the chassis of the vehicle and causing it to move, which is extremely simple in comparison with the conventional devices. Therefore, the adjustment base can be installed in a very short time, which can greatly improve productivity. In addition, because it is not necessary to position a bolt or similar connecting device within the path of the movement of the adjustable anchor, the vehicle production process is simplified.

Further, by providing a projection projected from the adjustment base toward the chassis side in contact with the chassis, the play between the adjustment base and the chassis is eliminated without adding particular parts, so that it is possible to prevent abnormal noise generation.

## Claims

1. An adjustable shoulder anchor mechanism for use in a vehicle chassis (1) having an engaging hole (31), comprising an elongated adjustment base (2) having a plurality of engaging openings (8) arranged in a longitudinal direction thereof, an adjustable anchor (3) adapted to be guided along said adjustment base (2), a joint (4) connected to said adjustable anchor (3) to support a webbing (11), and a lock pin (5) provided in said adjustable anchor (3) and adapted to come into engagement with one of said engaging openings (8), and said adjustment base (2) formed at one end thereof with a hook section (20), said hook section (20) adapted to be moved to come into engagement with said vehicle chassis (1) on a peripheral portion of said engaging hole (31), said hook section having a tongue section (20a);
characterized in that said hook section (20) is adapted to be inserted into said engaging hole (31) and has an interlocking means to come into engagement with said vehicle chassis (1) on said peripheral portion of said engaging hole (31), said interlocking means comprising said tongue section (20a) and a section (25) raised from and inclined to said tongue section (20a);
and in that
a projection (12) projects from the adjustment base (2) towards the chassis side to contact the chassis (1).

2. A mechanism as claimed in claim 1 wherein said chassis (1) is pinched between said tongue section (20a) and said projection (12).

3. A mechanism as claimed in claim 1 or 2 wherein said projection (12) is a portion of said adjustment base (2) raised from a cutout.

## Patentansprüche

1. Einstellbarer Schultergurtverankerungsmechanismus zur Verwendung in einer ein Eingriffsloch (31) aufweisenden Fahrzeugkarosserie (1), enthaltend ein längliches Einstellbasisteil (2) mit einer Vielzahl von Eingriffsöffnungen (8), die in dessen Längsrichtung angeordnet sind, einen einstellbaren Anker (3), der geeignet ist, um entlang dem Einstellbasisteil (2) geführt zu werden, ein Gelenk (4), das mit dem einstellbaren Anker (3) zum Halten eines Gurtbandes (11) verbunden ist, und einen Sperrstift (5), der in dem einstellbaren Anker (3) vorgesehen ist und mit einer der Eingriffsöffnungen (8) in Eingriff kommen kann, und wobei das Einstellbasisteil (2) an seinem einen Ende einen Hakenabschnitt (20) ausgeformt hat, wobei der Hakenabschnitt (20) derart bewegt werden kann, daß er mit der Fahrzeugkarosserie (1) an einem Umfangsteil des Eingriffslochs (31) in Eingriff kommen kann, und wobei der Hakenabschnitt (20) einen Zungenabschnitt (20a) aufweist;
dadurch gekennzeichnet, daß der Hakenabschnitt (20) in das Eingriffsloch (31) eingefügt werden kann, und er eine Verriegelungseinrichtung aufweist, um mit der Fahrzeugkarosserie (1) an dem Umfangsteil des Eingriffslochs (31) in Eingriff zu kommen, wobei die Verriegelungseinrichtung den Zungenabschnitt (20a) und einen Abschnitt (25), der sich vom Zungenabschnitt (20a) abhebt und sich gegen diesen neigt, aufweist,
und daß der Vorsprung (12) vom Einstellbasisteil (2) gegen die Karosserieseite hervorsteht, so daß er die Karosserie (1) kontaktiert.

2. Mechanismus nach Anspruch 1, dadurch gekennzeichnet, daß die Karosserie (1) zwischen den Zungenabschnitt (20a) und den Vorsprung (12) geklemmt ist.

3. Mechanismus nach Anspruch 1 oder 2, dadurch gekennzeichnet, daß der Vorsprung (12) ein Teil des Einstellbasisteils (2) ist, der sich von einem Ausschnitt abhebt.

## Revendications

1. Mécanisme de renvoi de sangle latéral réglable pour utilisation dans un châssis de véhicule (1) ayant un trou d'engagement (31), comprenant une base de réglage allongée (2) ayant une pluralité d'orifices d'engagement (8) disposés dans une direction longitudinale de celle-ci, un ancrage réglable (3) adapté à être guidé le long de ladite base de réglage (2), un joint (4) relié audit ancrage réglable (3) servant de support à une sangle (11), et une broche de verrouillage (5) disposée dans ledit ancrage réglable (3) et adaptée à venir au contact de l'une desdites ouvertures d'engagement (8), et ladite base de réglage (2) étant munie à l'une de ses extrémités d'une section à crochet (20), ladite section à crochet (20) étant adaptée à être déplacée pour venir s'engager sur ledit chassis de véhicule (1) sur une partie periphérique dudit trou d'engagement (31), ladite section à crochet ayant une languette (20a);
caractérisé en ce que ladite section à crochet (20) est adaptée à être insérée dans ledit trou d'engagement (31) et présente un moyen d'enclenchement destiné à venir au contact dudit chassis de véhicule (1) sur ladite partie périphérique dudit trou d'engagement (31), ledit moyen d'enclenchement comprenant ladite languette (20a) et une section (25) partant en montant de ladite languette (20a);
et en ce que :
une protubérance (12) fait saillie sur ladite base de réglage (2) vers le coté du châssis pour venir au contact du châssis (1).

2. Mécanisme selon la revendication 1, dans lequel ledit chassis (1) est pincé entre ladite languette (20a) et ladite protubérance (12).

3. Mécanisme selon la revendication 1 ou 2, dans lequel ladite protubérance (12) est une partie de ladite base de réglage (2) partant en montant d'une découpure.
